# EUROPEAN PATENT APPLICATION

(11) **EP 1 296 529 A2**
(43) Date of publication of application: **26.03.2003**
(21) Application number: 02019951.9
(22) Date of filing: 05.09.2002
(51) Int. Cl.: H04Q 7/24

(54) **Application location register routing**

(30) Priority: 25.09.2001 US 962510
(71) Applicant: ALCATEL, 75008 Paris (FR)
(72) Inventor: Ali, Mohammed Zamshed, Plano, Texas 75024 (US); O'Toole, Maureen Rose, Plano, Texas 75025 (US); Evans, Werner Reinhard, Plano, Texas 75023 (US)
(74) Representative: Dreiss, Fuhlendorf, Steimle & Becker

(57) **Abstract**

The present invention provides an apparatus, system and method for providing location register routing in a mobile telecommunication network. A mobile switching center enabled IS-41 query message requesting information related to a specific mobile unit is routed to a signaling transfer point with location register routing capabilities for routing to a remote database containing the requested information. The signaling transfer point validates the query message for location register routing and forwards the query message for processing to a location register routing application where a mobile identification number or a mobile directory number is extracted from the query message. The application uses the mobile identification number or mobile directory number to perform an address translation in a network address database which contains the remote database network address. The translated remote database network address is subsequently incorporated in the query message for network routing to the remote database.

## Description

### BACKGROUND OF THE INVENTION

### Technical Field of the Invention

The present invention relates generally to the field of telecommunications and, more particularly, to message routing in a mobile telecommunication network.

### Description of Related Art

When mobile service providers set up their mobile network, it typically includes a number of mobile switching centers (MSCs), some pairs of signal transfer points (STPs), and a plurality of home location registers (HLRs). Routing of mobility information requests from the MSCs to the HLRs currently is implemented via Message Transfer Part (MTP) routing. The MTP is only capable of point-to-point routing. This means that a message can be routed based only on the physical links available from a signaling point. Thus, each switching center has to know the relation between a mobile identification number (MIN) or mobile directory number (MDN) and a specific HLR and that relationship is expressed via a mapping such as MIN to HLR point code (PC). The MTP provides both the origination point code (OPC) and the destination point code (DPC) for all queries going to the HLR, the queries passing through the STP transparently at the MTP level.

Until recently, mobile service providers have been able to store and maintain subscriber information and current location data on only one HLR. However, due to the escalating number of subscribers and the rapid expansion of the wireless networks, it has become necessary to employ multiple HLRs to accommodate the growth. Using the above-mentioned scheme imposes an operational burden on the mobile service provider especially where the number of mobile subscribers and the number of HLRs increases significantly. Each switching center must have its MIN/MDN to PC database updated as additional subscribers are activated and additional HLRs are deployed.

A multiple HLR system lacks flexibility and adversely impacts switching center performance in call handling when the number of database entries increases in order to accommodate movement of subscriber numbers among the various HLRs needed to better balance the offered traffic load. Typically, the MIN/MDN to PC database specifies a range of MIN/MDN numbers mapped to a specific HLR, in an attempt to keep the total number of database entries at a manageable level at the switching centers. However, even with this approach, the subscribers do not fill up the ranges on one HLR in the same frequency as on other HLRs, leading to a disproportionate traffic bearing burden on specific HLRs. Thus, the MIN/MDN to PC database entries are often broken into ranges encompassing fewer subscriber numbers, so the penalty for better distribution is more database entries to be managed. This inflexible relationship restricts the ability of the service provider to fully manage MIN subscriber allocation.

Accordingly, a need has arisen for a solution to the location register routing problem for a network having multiple home location registers and ever increasing roaming partners. The present invention provides an apparatus, system and method for location register routing which addresses this problem.

### SUMMARY OF THE INVENTION

The present invention achieves technical advantages as an apparatus, system and method for providing location register routing in a mobile telecommunication network. A mobile switching center enabled IS-41 query message requesting information related to a specific mobile unit is routed to a signaling transfer point with location register routing capabilities for routing to a remote database containing the requested information. The signaling transfer point validates the query message for location register routing and forwards the query message for processing to a location register routing application where a mobile identification number or a mobile directory number is extracted from the query message. The application uses the mobile identification number or mobile directory number to perform an address translation in a network address database which contains the remote database network address. The translated remote database network address is subsequently incorporated in the query message for network routing to the remote database.

### BRIEF DESCRIPTION OF THE DRAWINGS

For a more complete understanding of the present invention, reference is made to the following detailed description taken in conjunction with the accompanying drawings wherein:
Figure 1 illustrates a block diagram of a communication network for message routing in accordance with an exemplary embodiment of the present invention;
Figure 2 illustrates a block diagram of a message routing system including a mobile switching center (MSC), home location register (HLR), and signaling transfer point (STP) with associated location register routing in accordance with an exemplary embodiment of the present invention;
Figure 3 illustrates a location register routing unit in accordance with an exemplary embodiment of the present invention;
Figure 4 illustrates a simplified method diagram for location register routing in accordance with an exemplary embodiment of the present invention; and
Figure 5 illustrates a simplified message modification scheme in accordance with an exemplary embodiment of the present invention

### DETAILED DESCRIPTION OF THE INVENTION

The numerous innovative teachings of the present application will be described with particular reference to the presently preferred exemplary embodiments. However, it should be understood that this class of embodiments provides only a few examples of the many advantageous uses and innovative teachings herein. In general, statements made in the specification of the present application do not necessarily delimit any of the various claimed inventions. Moreover, some statements may apply to some inventive features, but not to others.

There are several mobile service providers in operation, particularly in the U.S., providing mobility services to a customer base using IS-41 standard as the mobility protocol infrastructure for providing mobility services. Since these operators typically use the same vendor equipment or equipment with similar capabilities, each service provider experiences the same or similar problems with subscriber management in the expanding mobile network.

At least some mobile service providers currently do not have the ability to route MIN directed requests via Global Title, but rather route based on existing HLR Point Codes. A solution is to remove current MIN/MDN to PC database systems from management at the switching centers, and include a database to be hosted and managed at the STP. However, this should preferably be done without compromising existing inter-working relationships between mobile providers.

In order to avoid requiring the insertion of a Global Title Address system at the MSC, and minimally impact the inter-working relationship between service providers, a solution of the present invention enables: a) translation of MIN/MDN to HLR point code performed and hosted on the STP and b) in order to get the STP the messages/queries containing the MIN/MDN data needed for translation, the switching systems can address the STP rather than the HLR or other indications can be coded and decoded within the MSC query message.

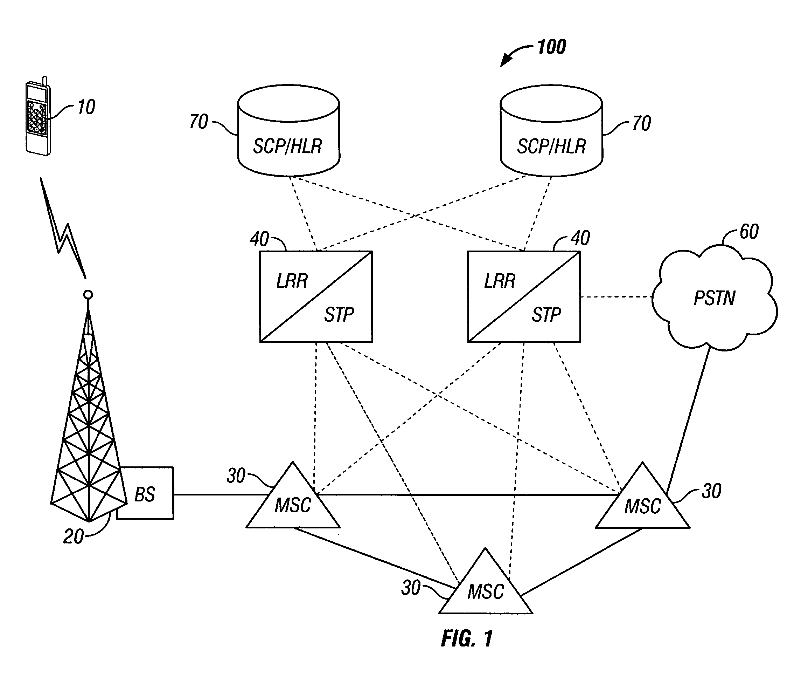

Referring now to Figure 1, there is illustrated a block diagram of a communication network 100 for message routing in accordance with an exemplary embodiment of the present invention. The network 100 includes a plurality of wireless mobile units 10 which communicate with a base station 20 through a radio transceiver tower. However, the wireless mobile units 10 can communicate with other wireless transceiver systems such as satellite wireless transponders. The base station 20 is coupled to at least one mobile switching center (MSC) 30, which is further coupled to a network of MSCs 30. The MSCs 30 are further coupled to a pair of signaling transfer points (STPs) 40. The STPs 40 and MSCs 30 may also be coupled to a public switched telephone network 60. The network 100 further includes service control points (SCPs) 70 which include at least one home location register (HLR) data base and can include visitor location registers (VLR). The STPs 40 are interconnected to the SCPs 70 and the MSCs 30 through signaling system number seven (SS7) link sets specified by ANSI. The network can also include other services and databases known in the art such as authentication centers, short message service center, service management system, etc.

At least one of the STPs 40 also includes a location register routing (LRR) system for enabling a mobile service provider to route IS-41 mobility request messages, for example, to the appropriate register database such as an HLR or VLR. The MSC 30 communicates by sending IS-41 Mobile Application Part (MAP) messages to other nodes in the network 100 via the STP 40. Subsequent to receiving the MAP messages, the LRR system associated with the STP 40 translates the MAP messages for routing to the appropriate HLR or VLR. The LRR system can also enable a mobile service provider to route mobility request messages to other databases located in the telecommunication network 100.

The Location Register Routing (LRR) of the present invention provides to a wireless network the capability to route IS-41 mobility request messages to the appropriate HLR or VLR without forcing the MSC 30 to implement a system for Route on Global Title. The IS-41 messages comply with the ANSI IS-41 protocol of the Cellular Radiotelecommunications Intersystem Operation, TIA/EIA standard, which is hereby incorporated by reference. MSCs 30 communicate with other network nodes by sending IS-41 Mobile Application Part (MAP) messages to these nodes via the STP 40. Routing of these messages to the appropriate HLR or VLR is accomplished by means of a database translation provided by the LRR.

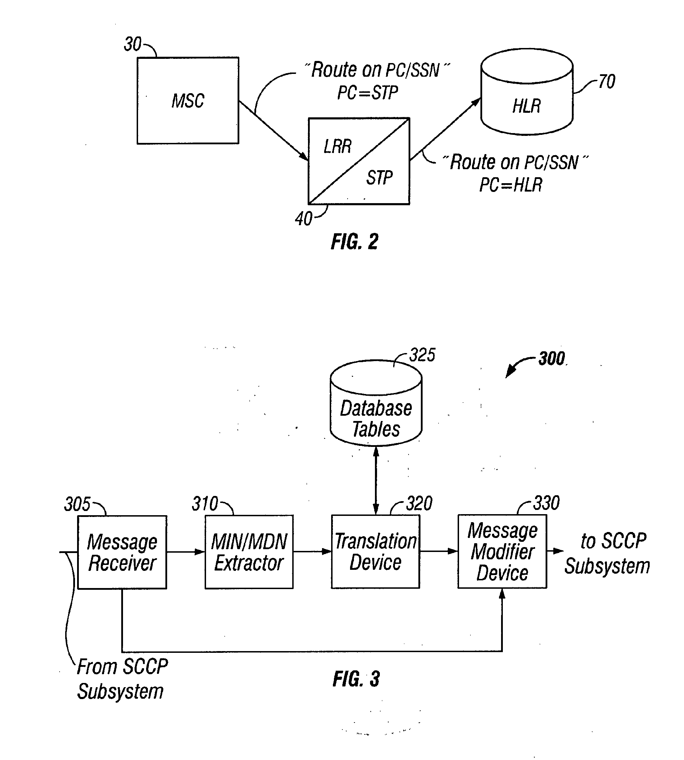

Referring now to Figure 2, there is illustrated a block diagram of a message routing system including an MSC 30, an STP 40 with associated LRR, and an HLR 70 in accordance with an exemplary embodiment of the present invention. Generally, the MSC 30 communicates via messaging to the STP 40 as route on PC/SSN. Once received by the STP 40, these messages are routed to the associated LRR using known signaling connection control part (SCCP) routing of messages. Subsequently, the LRR examines the received message for MIN and MDN digits. Using the MIN/MDN digits, a look-up is performed in an associated database for a matching MIN/MDN. If the MIN/MDN digits found in the message match an entry in the database, the LRR selects a destination point code (DPC) of the appropriate HLR 70 from the resulting destination group in the database for further messaging to the appropriate HLR 70 as route on Global Title.

A destination is a PC/SSN. A destination group comprises one or more PC/SSN's which can be redundant for traffic load-sharing or backup capabilities. A destination group exists for each entry in the database and SCCP is responsible for selecting the appropriate destination based on the algorithm defined for the type of destination group (Load shared, Dominant replicant, Solitary, Weighted load shared, Shared replicate). The LRR application gets the destination group and SCCP selects one of the destinations from the group to which the message is routed. The end result is a PC/SSN and a routing indicator which is stored for each destination. The routing indicator will be either Route on PC/SSN or Route (Global) on Global Title. If the message is destined for the HLR, the routing is preferably Route on PC/SSN as this is the final destination. If the message is destined for a land line number, for example, or a number not owned by the network, the routing is preferably to another STP as route on Global Title, as this is probably not the final destination.

Detection points can be incorporated in the STP 40 to properly intercept or interpret the message requests intended or needing LRR processing. Messages that do not match these criteria will continue to be routed as they are currently.

In one embodiment, the IS-41 messages are sent to the STP 40 as Route on PC/SSN with an STP "alias" as the PC and 5 (MAP)/6 (HLR)/7 (VLR) as the SSN. Once received by the STP, these messages are routed to the LRR system associated with the STP 40 by using the normal SCCP routing of messages to a local subsystem.

Thus, the STP 40 supports an "alias" point code and the primary self-identifier in the message discrimination function. This means that if a message is received in the STP 40 addressed to the "alias" in the DPC field of the message, the received message is routed to the LRR. In order to cater to connection to multiple networks, each participating network should support an "alias" point code method.

Also, since the IS-41 messages use SCCP as one of the routing protocols in the SS7 stack, the STP 40 uses the MTP service indication octet (SIO) identifying SCCP as the user part as an additional means of message detection.

If the previously defined criteria are not met for a particular message, it is not forwarded to the STP 40 hosted LRR function, and instead is processed/routed using the normal MTP and SCCP message routing rules and functions. Note: it is expected that messages not requiring LRR service at the STP 40 are encoded such that the message filtering rules are not met. For example, query responses *from* the HLR 70 should be sent to the originating requesting switching centers via the MTP level and not back to the STP 40. Thus, the DPC in the query response would identify the switching center 30 rather than the "STP alias". Further filtering can be performed on parameters in the TCAP portion of the message.

IS-41 messages handled by the STP 40 conform to the encoding rules specified by the SCCP layer, according to ANSI T1.112 Signaling System Number 7 - Signaling Connection Control Part Standard, which is hereby incorporated by reference. Additionally, the IS-41 messages handled by the STP are encoded in conformance with the TCAP layer, according to ANSI T1.114 Signaling System Number 7 - Transaction Capabilities Application Part Standard, which is hereby incorporated by reference.

According to an exemplary embodiment of the present invention, the IS-41 LRR system can reside on a distributed SS7 service processor (DSS) associated with the STP 40 which is responsible for processing of the IS-41 MAP messages sent by the SCCP Subsystem on a common channel distributor (CCD), for example, associated with the STP 40. Once a message is received from SCCP, the IS-41 LRR system examines the MAP portion of the message to obtain MIN/MDN digits. If the MIN/MDN digits are found in the message, the LRR system performs a database lookup with the digits. For use with an expanded GTT database, a translation type = 0 is preferably used.

The LRR database can reside on the DSS processor and is used to perform the database lookup. If the MIN/MDN digits are found in the database, the LRR system performs a database translation to obtain an entry for the corresponding destination group of HLR 70. In addition, the LRR system copies the MIN/MDN digits from the MAP portion of the message. For non-final destinations, the LRR system can change the routing indicator to Global Title. The LRR system then sends the modified message along with the destination group entry back to SCCP on the CCD for routing.

The LRR system at the DSS processor can also validate the package type, operation code, and operation family in the TCAP portion of the incoming message. If any of these parameters are wrong, the STP 40 performs TCAP error processing by sending a TCAP reject component with the appropriate error code back to the originator.

If there is no error in validating the package type, operation code, and operation family in the TCAP portion of the incoming message, the IS-41 LRR system examines the MAP portion of the message to obtain MIN/MDN digits. If the message contains no MIN/MDN digits, the STP performs a TCAP error processing by sending a TCAP reject component with the appropriate error code.

More particularly, upon receiving an IS-41 message from SCCP, the IS-41 LRR system verifies and continues processing when the TCAP component of the message has a Component Type of Invoke (Last). If the Component Type of the message is not Invoke (Last), the LRR system sends a TCAP reject response with the return error specified by an error code set to "Incorrect Parameter".

Also, the LRR system can verify for continued processing when the TCAP component of the message contains an Invoke id. If the message does not contain an Invoke id, the system sends a TCAP reject response with the return error specified by an error code set to "Incorrect Parameter".

The LRR system can verify for continued processing when package type identifier in the TCAP portion of the message indicates "Query With Permission" . If not, the LRR system sends a TCAP reject response with the return error specified by an error code set the "Unrecognized Package Type" .

Additionally, the LRR system can verify for continued processing when the message contains an operation code of "Private TCAP" and an operation family of "IS-41 MAP" (decimal 9). If the message does not contain an operation code of "Private TCAP" and an operation family of "IS-41 MAP", the system sends a TCAP reject response with the return error specified by an error code set to "Unrecognized Operation Code".

Further, the LRR system checks if the TCAP portion of the incoming IS-41 message contains Mobile Identification Number (MIN) digits. If the MIN digits are present, the system uses the MIN digits to perform the database lookup.

If the MIN digits are not present, the system checks if the TCAP portion of the incoming IS-41 message contains MDN digits. If the MDN digits are present, the LRR system uses the MDN digits to perform the database lookup.

If the TCAP portion of the incoming message does not contain either the MIN digits or the MDN digits, the IS-41 LRR system sends a TCAP return error with an error code set to "Missing Parameter".

When MIN/MDN digits are found in the incoming message, the LRR system verifies that the MIN/MDN contains the appropriate digits which can vary depending of the country or network in which the LRR resides. Generally, the number of digits will be ten or eleven. If not, the LRR system can send a TCAP return error component with an error code set to "Parameter Error" .

If MDN is used, the LRR system verifies that the encoding scheme of the MDN digits is encoded in the Bellcore standard (BCD). If not, the LRR system can send a TCAP return error component with an error code set to "Unrecognized Parameter Value".

A LRR database on the DSS processor is used to perform the database lookup. If the MIN/MDN digits found in the message match with an entry in the LRR database, a look-up is performed and the resultant destination group is appended to the message which is sent back to the SCCP. Subsequently, the SCCP selects a destination point code (PC) of the appropriate HLR or VLR from the resulting destination group in the database. The PC is then replaced in the CdPA field of the SCCP portion of the message with the PC obtained from the database translation. The originating switch point code (OPC) from the MTP portion of the message is copied and inserted in the SCCP calling party address (CgPA) field of the message. If the digits are not found in the table, the system can perform failure error processing. Once the message is modified with the PC of the HLR or VLR and the OPC, the STP routes the message to the appropriate HLR or VLR.

Referring now to Figure 3, there is illustrated a Location Register Routing (LRR) unit 300 in accordance with an exemplary embodiment of the present invention. The LRR unit 300 can reside in a processor (e.g. DSS) associated with the STP 40. The IS-41 MAP messages sent by the SCCP subsystem associated with the STP 40 are received by the message receiver 305. Subsequently, a MIN/MDN extractor 310 examines the IS-41 MAP message received at the message receiver 305 for a MIN/MDN. If the MIN is present in the TCAP portion, the MIN is used. If the MDN is present, it is used for the lookup function.

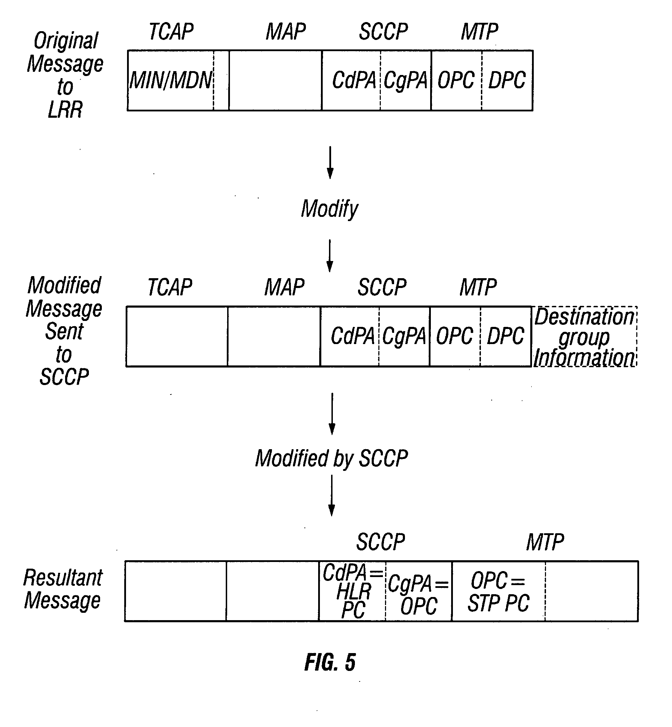

The extracted MIN/MDN is used by a translation device 320 to perform a look-up in a database 325 (the database 325 can include a modified GTT database) which includes translation tables pointing to specific destination groups in which a destination group includes one or more PC/SSN's. A database management facility can be included to manage the MIN/MDN database. Such a facility may be implemented either through manual operation or on as an automated facility such as a Service Management System (L-SMS). Once a selected destination group is obtained, it is sent to a message modifier device 330. The message modifier device 330 modifies the message received by the message receiver 305 to include the destination group obtained from the translation device 320; and subsequently forwards the modified message back to the SCCP subsystem associated with the STP 40 for further processing as illustrated in Figure 5.

More particularly, the SCCP selects a destination from the destination group obtained from the translation device 320 and changes the PC in the CdPA to the obtained point code of the destination HLR, for example. Further, the routing indicator and the SSN (if applicable, i.e. non-zero) are changed in the CdPA. Additionally, the origination switch point code (OPC) from the MTP portion of the original message is inserted in the SCCP CgPA field and the STP PC is placed in the OPC of the MTP portion. The insertion of the originating switch point will allow a destination HLR to return the response to an originating MSC.

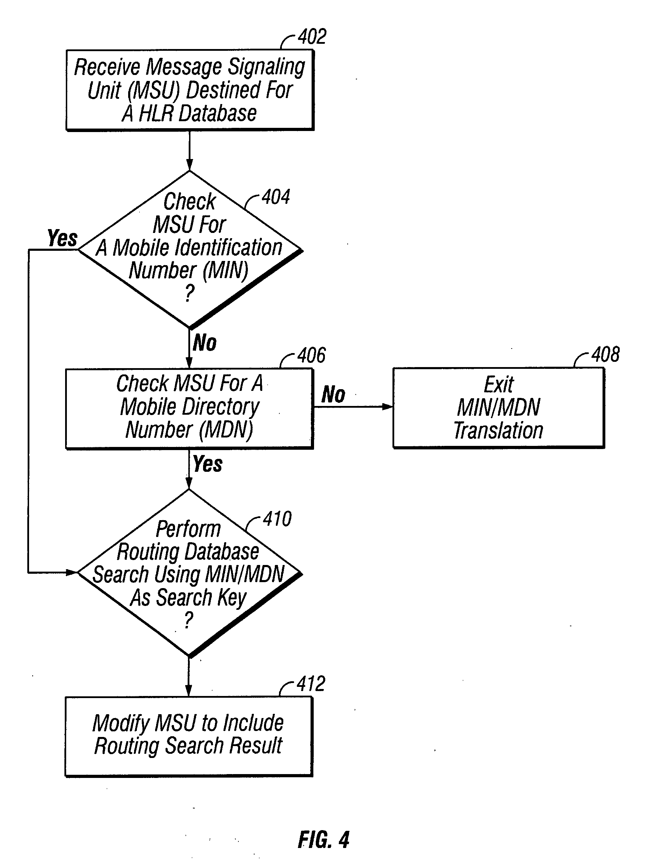

Referring now to Figure 4, there is illustrated a simplified method diagram for location register routing in accordance with an exemplary embodiment of the present invention. A message signaling unit (MSU), such as IS-41 MAP, destined for a remote database such as HLR database is received at 402 for processing. The receiving act 402 can also include error detection for verifying that the received MSU is free of transmission error that would prevent proper location register routing.

The MSU is subsequently examined at 404 to determine the presence of a mobile identification number (MIN). A positive indication of the presence of a MIN enables a routing database search at 410 using the MIN, otherwise, the MSU is examined for a mobile directory number (MDN) at 406. If no MDN is detected, the MSU is exited from location register routing at 408. The detection of an MDN enables a routing database search at 410 using the MDN. Detection of an MIN or MDN can also include decoding the MSU to obtain the detected MIN/MDN. A routing database search 410 is performed using a detected MIN or MDN as a search key for a network point code address associated with the destined HLR. The database search 410 can be performed on one or more databases for MIN/MDN network point code translation. Further, if the routing database search 410 fails (i.e., the MIN/MDN is not found in the translation tables of the database) the MSU can be exited from the location register routing process.

Following a successful MIN/MDN network point code translation, the MSU is modified at 412 to include the search results (i.e., the associated network point code address). More specifically, the point code is used to replace any current point code residing in a called party address (CdPA) field of the SCCP portion of the MSU. Additionally, any originating switch point code (OPC) from the MTP portion of the MSU is inserted in a SCCP calling party address (CgPA) field of the MSU. Modification of the MSU 412 can also include adding an indicator for noting that the MSU is modified for Route on PC/SSN or Route on Global Title processing by an associated STP.

Although a preferred embodiment of the method and system of the present invention has been illustrated in the accompanied drawings and described in the foregoing Detailed Description, it is understood that the invention is not limited to the embodiments disclosed, but is capable of numerous rearrangements, modifications, and substitutions without departing from the spirit of the invention as set forth and defined by the following claims.

## Claims

1. A method for message routing to a register database in a mobile telecommunication network, comprising:
receiving a message signaling unit associated with a telecommunication client destined for said register database;
extracting from said received message signaling unit an identification code assigned to said telecommunication client;
translating said client identification code into a network address code for said register database; and
modifying said received message signaling unit to include at least a portion of said translated network address for routing to said register database.

2. The method of Claim 1 wherein said extracting step includes decoding the received message signaling unit to obtain therefrom one of a mobile identification number and a mobile directory number.

3. The method of Claim 1 further comprising:
translating said decoded client identification code into a network address point code for said register database; and
modifying said received message signaling unit to include at least a portion of said translated network address point code for routing to said register database, wherein said register database is a home location register associated with said telecommunication client.

4. The method of Claim 1, wherein said translating further comprises:
searching a database for an entry matching said decoded client identification code; and
determining said network address code from an entry in said database associated with an entry matching said decoded client identification code.

5. The method of Claim 1, wherein said network address code includes a point code and said modifying said received message signaling unit further includes inserting said point code in a signaling connection control part (SCCP) called party address field of said received message signaling unit.

6. The method of Claim 5 further comprising inserting in an SCCP calling party address field of said received message signaling unit an originating switch point code associated with a mobile switching center in said mobile telecommunication network that originated said received message signaling unit.

7. The method of Claim 1 further comprising modifying said received message signaling unit to include an indicator for one of routing on PC/SSN and routing on global title.

8. The method of Claim 1 further comprising forwarding said modified received message signaling unit to a transfer node for routing on global title.

9. The method of Claim 1 further comprising inserting in an SCCP calling party address field of said received message signaling unit an originating switch point code associated with a mobile switching center in said mobile telecommunication network that originated said received message signaling unit.

10. An apparatus for providing routing for a mobile switching center (MSC) message that requests information associated with a mobile unit in a mobile telecommunication network, wherein said mobile unit information is stored in a remote database, said apparatus comprising:
an extractor having an input for receiving said MSC message and operable to extract from said MSC message an identification code assigned to said mobile unit;
a translator having an input coupled to said extractor for receiving said identification code and translating said identification code into a network address code for said remote database ; and
a modifier having an input for receiving said MSC message, said modifier coupled to said translator for modifying said MSC message to include said translated network address code.

11. The apparatus of Claim 10 wherein said translator includes a database having a memory for storing a plurality of mobile unit identification codes and corresponding network address codes that identify remote databases associated with each respective mobile unit.

12. The apparatus of Claim 10, wherein said extractor is further operable to decode said MSC message to obtain therefrom one of a mobile identification number and a mobile directory number.

13. The apparatus of Claim 10, wherein said network address code is a network point code for a home location register, and wherein said remote database is a home location register.

14. The apparatus of Claim 10, further including a signaling connection control part (SCCP) modifier having an input for receiving said modified message signaling unit and operable to incorporate said network address code in a SCCP called party address field associated with said MSC message.

15. The apparatus of Claim 14, wherein said SCCP modifier is further operable to incorporate in an SCCP calling party address field of said MSC message a switch point code associated with a mobile switching center that originated said MSC message.

16. The apparatus of Claim 10, further including a signaling connection control part (SCCP) modifier having an input for receiving said modified message signaling unit and operable to incorporate in an SCCP calling party address field of said MSC message a switch point code associated with a mobile switching center that originated said MSC message.

17. The apparatus of Claim 10 implemented in a signal transfer point (STP) associated with said mobile telecommunication network, wherein said MSC message includes a code for routing said MSC message to said STP.

18. A system for routing a query message requesting information associated with a mobile unit, wherein said information is stored in a remote database, said system comprising:
a mobile switching center operably configured to route said query message on a communication link; and
a signal transfer node having an input coupled to said communication link for receiving said query message and operable to route said query message to said remote database, said signal transfer node further comprising:
an extractor having an input for receiving said MSC message and operable to extract from said MSC message an identification code assigned to said mobile unit;
a translator having an input coupled to said extractor for receiving said identification code and translating said identification code into a network address code for said remote database; and
a modifier having an input for receiving said MSC message, said modifier coupled to said translator for modifying said MSC message to include said translated network address code.

19. The system of Claim 18, wherein said extractor is further operable to decode said MSC message to obtain therefrom one of a mobile identification number and a mobile directory number.

20. The system of Claim 18, wherein said network address code includes at least one PC/SSN for said remote database.

21. The system of Claim 18, further including a signaling connection control part (SCCP) modifier having an input for receiving said modified message signaling unit and operable to incorporate said network address code in a SCCP called party address field associated with said MSC message.

22. The apparatus of Claim 21, wherein said SCCP modifier is further operable to incorporate in an SCCP calling party address field of said MSC message a switch point code associated with a mobile switching center that originated said MSC message.

23. The system of Claim 18, further including a signaling connection control part (SCCP) modifier having an input for receiving said modified message signaling unit and operable to incorporate in an SCCP calling party address field of said MSC message a switch point code associated with a mobile switching center that originated said MSC message.

24. The system of Claim 18, wherein said mobile switching center is further operably configured to include a signal transfer point network address code with said query message.
